# EUROPEAN PATENT SPECIFICATION

(11) **EP 1 875 102 B1**
(45) Date of publication and mention of the grant of the patent: **20.03.2013**
(21) Application number: 06732486.3
(22) Date of filing: 26.04.2006
(51) Int. Cl.: F16G 5/16

(54) **POWER TRANSMISSION BELT FOR TRANSMITTING HIGH LOADS**
KRAFTÜBERTRAGUNGSRIEMEN ZUR ÜBERTRAGUNG VON HOHEN LASTEN
COURROIE DE TRANSMISSION DE PUISSANCE POUR TRANSMISSION DE CHARGES ELEVEES

(30) Priority: 26.04.2005 JP 2005128698; 27.10.2005 JP 2005312078; 28.02.2006 JP 2006051388
(43) Date of publication of application: 09.01.2008
(73) Proprietor: MITSUBOSHI BELTING LTD., Kobe-shi, Hyogo 653-0024 (JP)
(72) Inventor: UTO, Kuniharu c/o MITSUBOSHI BELTING LTD., Kobe-shi, Hyogo 653-0024 (JP)
(74) Representative: HOFFMANN EITLE
(86) International application number: PCT/JP2006/309184
(87) International publication number: WO 2006/115303

(56) References cited:
- EP-A1- 0 213 627
- EP-A2- 1 391 632
- JP-A- 61 103 029
- JP-A- 62 151 646
- JP-A- 63 034 342
- JP-A- 63 034 342
- JP-A- 2000 193 042
- JP-A- 2001 311 453
- JP-A- 2003 156 103
- JP-A- 2003 222 197
- JP-A- 2003 222 197
- JP-A- 2004 028 200
- JP-A- 2005 014 291
- JP-U- 60 154 646
- US-A1- 2003 087 716

## Description

### FIELD OF THE INVENTION

The present invention relates to a power transmission belt for transmitting high loads (hereinafter simply referred to as power transmitting belt) with blocks fixed on a center belt at a predetermined pitch in the longitudinal direction thereof, especially to a power transmission belt which is lightweight and is excellent in the flexural modulus, the impact resistance, the wear resistance and the dimensional accuracy and in which the movement of the center belt with respect to the blocks is restricted.

### BACKGROUND ART

A belt for use in belt-type continuously variable transmission is used by winding it around a speed change pulley of such that the V-groove width of the pulley is varied so as to vary the effective diameter of the belt wound around the pulley to thereby adjust the gear ratio thereof, and since the side pressure to it from the pulley is high, the belt must bear such a high pressure. Except for continuously variable transmission, a belt specifically resistant to high load must be used also for high-load transmission for which the life of ordinary rubber belts may be too short.

As such belts for such application, a tension-gearing power transmission belt with blocks fixed to the center belt thereof so as to increase the strength in the width direction of the belt is exemplified. Its concrete structure comprises a center belt formed of an elastomer such as rubber with cores embedded therein and blocks formed of an elastomer relatively more rigid than the elastomer used for the center belt, in which the blocks are fixed to the center belt with a fixer such as bolts or rivets.

The necessary quality of the blocks for use in such a tension-gearing power transmission belt is that they must have well-balanced properties of bending fatigue resistance, wear resistance, heat resistance, rigidity and impact resistance since they are for high load transmission in friction gearing as so mentioned hereinabove. In addition, another important element is that they do not abrade pulleys.

A power transmission belt that satisfies these requirements is disclosed, for example, in Reference 1. The belt comprises blocks of such that the part thereof to be in contact with a pulley has a two-layered structure prepared by coating an inset material formed of a metal or the like with a resin molding material prepared by adding a rubber component to a phenolic resin component.

Reference 2 describes a belt comprising blocks with no metallic insert embedded therein, which has made it possible to greatly reduce the weight of the belt though the belt is somewhat poor in point of the strength of the blocks not having a metallic insert. A belt with comprising blocks with an insert embedded therein is relatively heavy and is problematic in that, when the belt is rotated at high speed, then the center belt may be soon deteriorated owing to the resulting centrifugal force, and therefore, the belt is not so suitable for high-revolution applications. As opposed to it, the belt with no metallic insert embedded therein, as in Reference 2, has no problem of centrifugal force and is applicable to high revolution.

Reference 3 discloses a technique of setting the thickness of a center belt larger than the width of the groove of blocks so as to prevent the center belt and the blocks from rattling and to prevent the blocks from trembling, thereby inhibiting the friction and the heat generation between them.

Reference 4 discloses a belt in which the upper blocks have grooves on their surfaces and an elastomer not so hard is disposed on the upper surface of the center belt so that the grooves may bite the elastomer to thereby firmly fix the blocks and the center belt.

Further, the tension-gearing power transmission belt of the type has a problem in that friction always occurs between the blocks and the center belt during running and the center belt and the blocks are deteriorated owing to the stress concentration and the heat generation. Since the belt of the type is used for continuously variable transmission as in the above, it is so designed that the effective diameter of the pulley on which the belt is wound is varied for gear change, and the belt is used on small-diameter pulleys.

In particular, when the belt is wound on a small-diameter pulley, the inner peripheral surface of the center belt is sandwiched between the blocks and stress may concentrate to it and a great frictional force may occur around it, whereby the rubber constituting the center belt may be deteriorated and cracked and the belt may be thereby broken or cut.

For relieving the stress concentration to the center belt thereof, a belt is proposed in Reference 5, which is as follows: The upper edges of the convex portions provided on the inner peripheral surface of the center belt are made to be positioned above the position of the lower edges of the convex portions of the blocks so that, when the belt is bent as wounded around a pulley, the convex portions of the center belt are not caught by the blocks.

Reference 6 discloses a belt which is so designed that, in the part where the blocks engage with the center belt thereof, the radius of curvature of the grooves formed on the inner peripheral surface of the center belt is made smaller than the radius of curvature of the convex portions formed by the blocks so that there could be a space between the two.

Reference 7 discloses a technique of using a resin composition prepared by adding a fibrous reinforcing material such as carbon fibers and a whisker-like reinforcing material such as zinc oxide whiskers to a thermoplastic resin, for blocks so as to increase the mechanical strength of the blocks and to reduce the weight thereof, thereby reducing the centrifugal force acting on the belt.

Reference 8 discloses a belt in which the center belt and the blocks are made to engage with each other in a concavo-convex-engaging mode.
[Reference 1] JP-A 63-34342
[Reference 2] JP-A 2001-311453
[Reference 3] JP-UM-A 1-55344
[Reference 4] JP-A 7-197997
[Reference 5] JP-A 62-151646
[Reference 6] JP-A 9-25999
[Reference 7] JP-A 2001-311453
[Reference 8] JP-UM-A 60-154646

With the recent diversification of needs, a power transmission belt has become required, to which the load is high but is slightly lower than that to conventional belts and which may be rotated at high speed.

Accordingly, for example, since the belt disclosed in Reference 1 comprises an insert material of aluminium alloy, it is heavy and may receive a large centrifugal force, when rotated at high speed, because of its heavy self-weight and, as a result, great tension may act on the belt and there may occur a problem in that the belt may be damaged or broken in its early stages.

The belt of Reference 2 does not have an insert material in the blocks. In case where a metallic insert material of aluminium alloy or the like is not used, then the blocks may be lightweight and therefore the overall weight of the belt may be greatly reduced. Accordingly, the belt may be advantageous for high-speed revolution.

However, in exchange for the reduction in the weight of the belt, the reduction in the strength of the blocks is inevitable, and therefore the blocks may be readily deformed. The belt of the type is so designed that the center belt formed of an elastomer is fitted to the grooves of the blocks. However, since the upper and lower beams of the blocks may be deformed when the center belt is fitted thereto, the center belt may be loosened while fitted to the blocks.

For solving the problems of wear and heat generation to be caused by the vibration of the blocks, a method may be employed of making the thickness of the center belt larger than the width of the grooves of the blocks, as in Reference 3. However, in case where the blocks have no insert material embedded therein, then there may be a problem in that the deformation of the upper and lower beams may be further larger. The movement of the center belt in the width direction thereof with respect to the blocks is problematic in that the transmission capability of the belt may lower and the running belt may give noises. For preventing the running belt from rattling, the width of the grooves of the blocks may be made smaller than the thickness of the center belt so as to increase the compression ratio. However, if the compression ratio is too large, then there may occur a problem in that the operation of fitting the center belt in assembling the belt may be difficult and a problem in that the heat generation may increase when the belt is bent.

In Reference 4, the center belt is sandwiched between the upper blocks and the lower blocks that are independent of each other, and the blocks are fixed by riveting. In this, the center belt is not engaged and fitted to the grooves of the blocks. The zigzag shape of the upper blocks is made to bite the center belt, but this is to restrict the movement only in the longitudinal direction of the belt.

Employing the constitution as in Reference 5 or Reference 6 may relieve the problem of such that, when the belt is bent, then friction may occur between the blocks and the center belt and stress may concentrate to the inner peripheral surface of the belt, whereby the center belt may be cracked or may be heated so that the rubber and other material thereof may be deteriorated.

However, a problem could not be solved in that the center belt is bent, as restrained by the blocks, especially it is bent around a small-diameter pulley, whereby higher friction may occur between the blocks and the center belt to cause heat generation and the inner peripheral surface of the belt may be greatly compressed to inevitably cause inner heat generation, therefore resulting in the wear of the center belt.

In case where a resin composition containing a whisker-like reinforcing material such as zinc oxide whiskers is used for the blocks as in Reference 7, then the whisker-like reinforcing material may promote more the abrasion of the center belt when friction have occurred between the blocks and the center belt and, as a result, there may readily occur a trouble of breakage of the center belt.

In the belt of Reference 8, plural center belts are disposed and they are made to engage with each other by their concavo-convexes to thereby prevent the center belts from being shifted from each other. In this, in addition, the concave portions of the center belts are made to engage with the convex portions of the blocks, or that is, the convex portions of the blocks are not made to bite the center belts.

EP 1 391 632 A2 discloses features falling under the preamble of claim 1.

JP 2003/222197 A and US 2003/087716 A 1 are further prior art documents.

### DISCLOSURE OF THE INVENTION

Under such the above situation, an object of the present invention is to solve the problems as above and to provide a power transmission belt in which the movement of the center belt in the width direction thereof with respect to the blocks is firmly restricted so that the blocks may be prevented from vibrating and from running obliquely while kept inclined relative to the width direction of the belt and in which the center belt is protected to prevent a problem of its breakage owing to abrasion, heat generation or deterioration.

The present inventors have made eager investigation to examine the problems.

As a result, it has been found that the foregoing objects can be achieved by the following power transmission belts. With this finding, the present invention is accomplished.

The present invention is mainly directed to the following items:
1. A power transmission belt for transmitting high loads having the features of claim 1.
2. The power transmission belt for transmitting high loads according to item 1, wherein the concavo-convex portion includes recesses provided on both front and back surfaces of at least one of the convex linear portions with respect to the longitudinal direction of the center belt.
3. The power transmission belt for transmitting high loads according to item 1, wherein the concavo-convex portion includes zigzag recesses and projections provided on the top of at least one of the convex linear portions.
4. The power transmission belt for transmitting high loads according to item 1, wherein the concavo-convex portion includes a projection provided on at least one end portion of the convex linear portions.
5. The power transmission belt for transmitting high loads according to item 1, wherein the concavo-convex portion includes a projection continuously extending in the longitudinal direction of the center belt
6. The power transmission belt for transmitting high loads according to item 1, wherein the concavo-convex portion has a height of 0.05 to 0.3 mm.
7. The power transmission belt for transmitting high loads according to item 1, wherein the fibrous member is a cover canvas covering a surface of the center belt.
8. The power transmission belt for transmitting high loads according to item 1, wherein the fibrous member is short fibers embedded in the elastomer.
9. The power transmission belt for transmitting high loads according to item 1, wherein an insert material is not embedded in the block.
10. The power transmission belt for transmitting high loads according to item 1, wherein the block comprises: a thermoplastic resin; and a fibrous reinforcing material of 1 to 60% by mass.
11. The power transmission belt for transmitting high loads according to item 10, wherein the thermoplastic resin is at least one selected from the group consisting of 4,6-nylon, 9T-nylon, polyphenylene sulfide, polyether-ether ketone, polyether sulfone and polyamidimide.
12. The power transmission belt for transmitting high loads according to item 10, wherein the fibrous reinforcing material is one of carbon fibers and a combination of carbon fibers and aramid fibers.
13. The power transmission belt for transmitting high loads according to item 10, wherein the block further comprises a whisker-like reinforcing material of 1 to 30% by mass.
14. The power transmission belt for transmitting high loads according to item 10, wherein the whisker-like reinforcing material is zinc oxide whisker.
15. The power transmission belt for transmitting high loads according to item 13, wherein the block comprises: a first thermoplastic resin composition not containing the whisker-like reinforcing material, the first thermoplastic resin composition is disposed in a surface contacting with the center belt; and a second thermoplastic resin composition containing the fibrous reinforcing material and the whisker-like reinforcing material, the second thermoplastic resin composition is disposed in a surface contacting with a pulley, the ratio of the surface of the first thermoplastic resin composition with respect to the overall surface contacting with the center belt is 70% or more, the ratio of the surface of the second thermoplastic resin composition with respect to the overall surface contacting with the pulley is 70% or more.
16. The power transmission belt for transmitting high loads according to item 7, wherein a bonding treatment is carried on the cover canvas, and a bonding treatment agent contains a friction coefficient-reducing material.
17. The power transmission belt for transmitting high loads according to item 16, wherein the cover canvas has a ratio of a width before the bonding treatment to a width after the bonding treatment of 55 to 70%.
18. The power transmission belt for transmitting high loads according to item 1, wherein a plurality of the blocks are disposed on the center belt along the longitudinal direction of the center belt, and the center belt further comprises a protective layer having a thickness of 1 to 100 µm at least in surfaces being contact with the blocks.
19. The power transmission belt for transmitting high loads according to item 18, wherein the protective layer comprises an urethane resin.
20. The power transmission belt for transmitting high loads according to item 18, wherein the protective layer comprises a metal plate layer.
21. The power transmission belt for transmitting high loads according to item 20, wherein the metal plate layer contains a fluororesin.
22. The power transmission belt for transmitting high loads according to any of items 1, wherein the cover canvas are provided on the upper and lower surfaces of the center belt and at least weft in the longitudinal direction of the center belt is an aramid fiber.

In the power transmission belt of the above inventions of the item 1, restricting parts is provided for restricting the movement of the center belt in both the longitudinal direction and the width direction thereof with respect to the blocks in order that the blocks may be fixed and held to the center belt, and a fibrous member exists at least in the surface of the center belt kept in contact with the blocks. Thus constructed, the power transmission belt may prevent a problem of belt operation failure for a long period of time. Briefly, when the center belt becomes loosened from the blocks, then friction may occur between them and finally it generates heat, and as a result the belt may fail. The power transmission belt of the invention is free from the problem. In addition, since a fibrous member exists in the surface of the center belt, the center belt may be prevented from being cracked, and, even when friction may occur between the blocks and the center belt, the resulting heat generation may be reduced.

As an example of the restricting parts, concavo-convex portions for restricting the movement of the center belt in the width direction thereof with respect to the blocks are provided in at least either the convex linear portions in the lower surfaces of the grooves of the blocks or those in the upper surfaces thereof so that they may deform the elastomer material to constitute the center belt, whereby the movement of the center belt with respect to the blocks may be strongly restricted. Accordingly, the problem of wear of the center belt and the blocks and the problem of heat generation by them may

be prevented. Since a cover canvas is provided on the upper and lower surfaces of the center belt, the wear of the center belt may be prevented even though friction may occur between the center belt and the blocks while driven, and, as a result, other troubles of loosened engagement between the center belt and the blocks and even breakage of the belt may be reduced.

In the power transmission belt of the invention, the height of the concavo-convex portion of the blocks is defined to a range as in the above invention of the item 6, and the belt may sufficiently exhibit its effect to restrict the movement of the center belt with respect to the blocks. Too large concavo-convex portions may lower the mechanical strength of the center belt, but the power transmission belt of the invention is free from the problem.

In the above invention of the item 7, the fibrous member is a cover canvas. In this, the center belt may be protected from the concavo-convex portions of the blocks that may deform the center belt, and the center belt is free from a problem of cracking.

In the above invention of the item 8, the fibrous material is short fibers to be in the elastomer to constitute the center belt. In this, the fibrous material may be disposed in the surface of the center belt in a more simplified manner and at a lower cost.

In the above invention of the item 9, the blocks do not have an insert material of aluminium alloy. Therefore, the belt is lightweight and is not damaged or broken by the centrifugal force while driven, and is therefore useful for high-speed revolution. On the contrary, there is a problem in that the blocks are readily deformed. To solve the problem, concavo-convex portions are provided in the upper surfaces or the lower surfaces of the grooves of the blocks, for restricting the movement of the center belt in the width direction thereof with respect to the blocks, as in the above invention of the item 1, whereby the center belt may be prevented from being loosened from the blocks.

In the above invention of the item 10, a fibrous reinforcing material is added as the reinforcing material for the blocks that comprise a thermoplastic resin, to thereby increase the mechanical strength of the blocks. As a result, the weight of the blocks may be reduced, and the centrifugal force of the blocks to act on the center belt may be reduced.

In the above invention of the item 11, at least any one of 4,6-nylon, 9T-nylon, polyphenylene sulfide, polyether-ether ketone, polyether sulfone and polyamidimide, especially preferably 4,6-nylon is used as the thermoplastic resin. Thereby injection-molding may be performed, and the blocks are easy to produce.

In the above invention of the item 12, carbon fibers are added so that the hardness of the blocks increases and the blocks may have good wear resistance. When a combination of carbon fibers and aramid fibers is added, then the characteristic of the carbon fibers improves the hardness of the blocks and that of the aramid fibers improve the toughness thereof. Accordingly, the blocks may have both improved wear resistance and improved impact resistance.

In the above invention of the item 13, not only a fibrous reinforcing material but also a whisker-like reinforcing material is added to the blocks that comprise a thermoplastic resin so as to improve the mechanical strength of the blocks. Therefore, the weight of the blocks may be further reduced, and even when a high-tenacity canvas of aramid fibers or the like is used as the cover canvas for the surface of the center belt, the blocks are not abraded by it and the heat generation around the blocks may be prevented. Accordingly, the resin material to constitute the blocks may be prevented from being deteriorated.

In the above invention of the item 14, zinc oxide whiskers have a high specific gravity and are highly rigid, and therefore they are effective for reducing the vibration of the blocks when the blocks come to engage with a pulley and for reducing the belt noises. In addition, adding the zinc oxide whiskers may stabilize the friction coefficient of the blocks, and the wear resistance of the blocks is further more improved.

In the above invention of the item 15, the center belt is prevented from being worn, and the blocks are reinforced by whiskers so as to be prevented from being worn by friction against a pulley.

In the above invention of the item 16, a friction coefficient-reducing material is incorporated into the bonding treatment agent for the cover canvas. Accordingly, the friction coefficient between the blocks and the cover canvas may be reduced, and the degree of friction therebetween may be reduced more, and the heat generation may also be reduced.

In the above invention of the item 17, the cover canvas to be used is subject to a bonding treatment and is thereby shrunk to such that the width of the shrunk canvas is from 55 to 70% of the width of the canvas before the bonding treatment. Therefore, the cover canvas is highly flexible, and it may well follow the shape of the mold used in producing the center belt. The concavo-convex profile of the center belt that is to engage with the blocks may be accurately formed to have the intended height/depth.

In the above invention of the item 18, a protective layer is disposed on the surface of the center belt, by which the center belt may be protected from friction against the blocks while driven. As a result, the belt failure such as its cutting may be prevented. In addition, the heat generation may be reduced, and the resin material to constitute the blocks may be prevented from being deteriorated.

In the above invention of the item 19, an urethane resin is used for the reinforcing resin. In the above invention of the item 20, a metal plate layer is used. In these, the protected center belt may have good wear resistance and good heat resistance, and is therefore deteriorated little by wear and heat.

When a fluororesin is added to the metal plate layer as in the above invention of the item 21, then the friction coefficient of the center belt may be further reduced, and even though rubbed against the blocks, the wear of the center belt may be small.

In the above invention of the item 22, the cover canvas for the upper and lower surfaces of the center belt is a canvas in which the weft in the longitudinal direction of the belt is aramid fibers. The cover canvas may more effectively protect the center belt against wear, and the life of the belt may be thereby prolonged.

### BRIEF DESCRIPTION OF THE DRAWINGS

Fig. 1 is a perspective view of the essential part of a power transmission belt.
Fig. 2 is a side view of the power transmission belt.
Fig. 3 is a front view of a block for use in the invention.
Fig. 4 is a plan view of the belt of Fig. 3, in which the convex linear portion is seen from its top.
Fig. 5 is a front view of a block for use in the invention.
Fig. 6 is a plan view of the belt of Fig. 5, in which the convex linear portion is seen from its top.
Fig. 7 is a front view of a block.
Fig. 8 is a plan view of the belt of Fig. 7, in which the convex linear portion is seen from its top.
Fig. 9 is a front view of a block for use in the invention.
Fig. 10 is a front view of a block for use in the invention.
Fig. 11 is a side view of the upper beam of the belt of Fig. 10.
Fig. 12 is a front view of a block for use in the invention.
Fig. 13 is a front view of a block for use in the invention.

The reference numerals used in the drawings denote the followings, respectively.
- 1: Power transmission belt
- 2: Block
- 2a: Side surface
- 2b: Side surface
- 3a: Center Belt
- 3b: Center Belt
- 4: Elastomer
- 5: Core
- 6: Upper Surface
- 7: Lower Surface
- 10: Cover canvas
- 11: Upper Beam
- 12: Lower Beam
- 13: Center Pillar
- 14: Engaging Groove
- 15: Engaging Groove
- 16: Upper Surface of Groove
- 17: Lower Surface of Groove
- 18: Concave linear portion
- 19: Concave linear portion
- 20: Convex linear portion
- 21: Convex linear portion
- 22: Concavo-convex portion
- 23: Projection
- 24: Recess

### BEST MODE FOR CARRYING OUT THE INVENTION

The invention is described concretely hereinunder with reference to the drawings attached hereto.

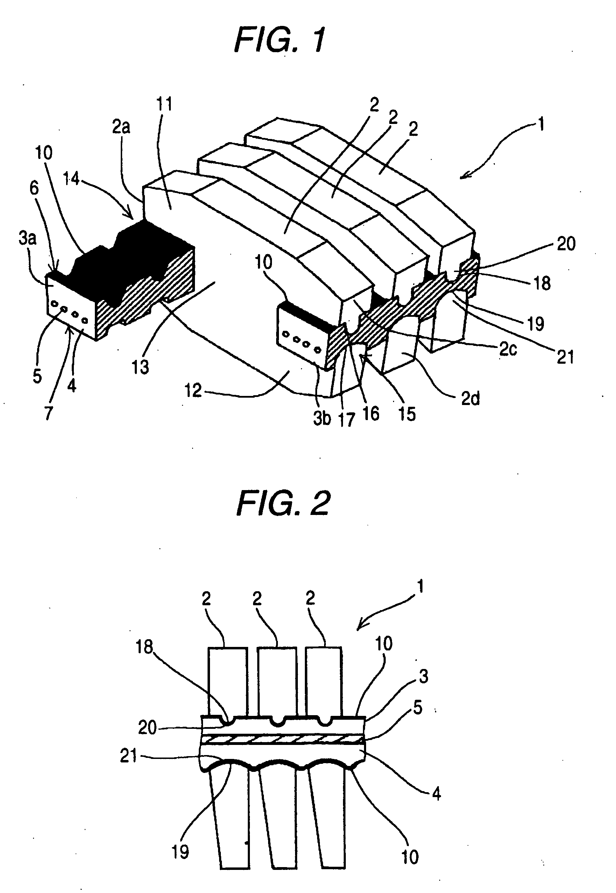

Fig. 1 is a perspective view of an essential part showing one example of a power transmission belt 1 and Fig. 2 is a side view of the essential part. The power transmission belt 1 of this embodiment comprises two center belts 3 a, 3b of an elastomer of the same width, each having spiral cores 5 embedded in the elastomer, and plural blocks 2 as anchored and fixed to the center belts 3a, 3b. Side surfaces 2a, 2b, 2c, 2d of the blocks are inclined so as to be able to engage with the V-grooves of a pulley. Having received a power from a driving pulley, the blocks pull the center belts 3a, 3b anchored and fixed thereto, and the power of the driving pulley is transmitted to a driven pulley.

The block 2 comprises an upper beam 1 1 and a lower beam 12, and a pillar 13 to link the upper and lower beams 11, 12 at their centers. Between the two side faces 2a, 2b of the block 2 and 2c, 2d thereof, formed are grooves 14, 15 in which the pair of center belts 3a, 3b are fixed.

In this embodiment, a restricting parts are provided for restricting the movement of the center belts 3a, 3b in the longitudinal direction and the width direction thereof with respect to the blocks 2, and a fibrous member is disposed at least in the parts of the surfaces of the center belts 3a, 3b that are kept in contact with the blocks 2. The belt of the type where the center belts 3a, 3b are anchored and fixed to the grooves 14, 15 of the side faces 2a, 2b, 2c, 2d of the block 2 is often problematic in that the center belts 3a, 3b clamped in the blocks 2 may be loosened owing to the flexure deformation of the upper and lower beams 11, 12 of the blocks and to the permanent deformation of the elastomer 4 that constitutes the center belts 3a, 3b, and as a result, the blocks 2 may vibrate relative to the center belts 3 a, 3b or may move in the width direction of the belt to produce friction and heat whereby the center belts may be broken or cut to finally cause belt running failure. In this embodiment, the restricting parts are provided for restricting the movement of the center belts 3a, 3b in the longitudinal direction and the width direction thereof with respect to the blocks 2, and this embodiment may therefore prevent them from being loosened for a long period of time and may solve the problem as above.

One example for the restricting parts for restricting the movement of the center belts 3a, 3b in the longitudinal direction thereof with respect to the blocks 2 is such that the convex linear portions 20, 21 provided in the upper surfaces 16 and the lower surfaces 17 of the grooves 14, 15 of the blocks 2 engage with the concave linear portions 18 provided in the upper surfaces of the center belts 3a, 3b and with the concave linear portions 19 provided in the lower surfaces thereof.

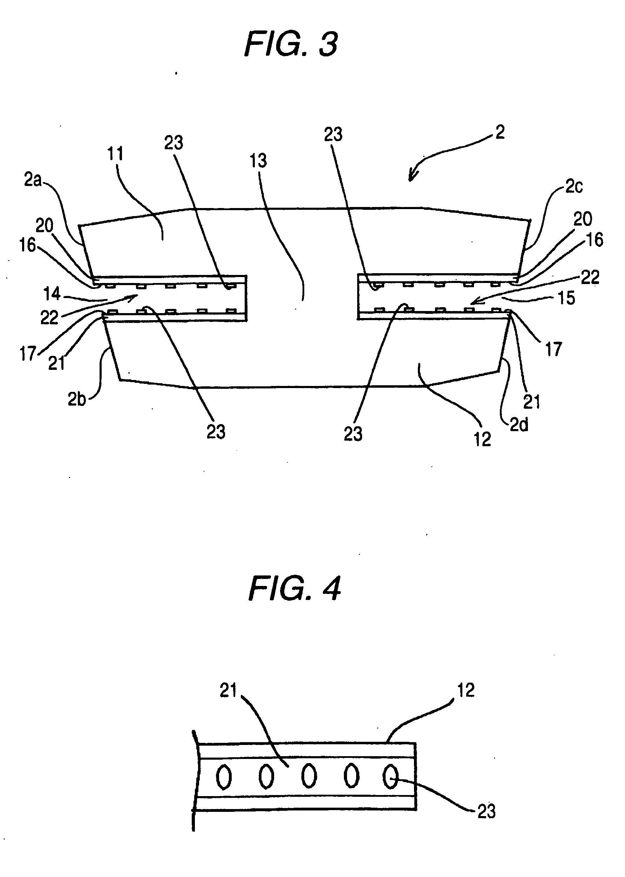

The restricting parts for restricting the movement of the center belts 3a, 3b in the width direction thereof with respect to the blocks 2 is, for example, such that the concavo-convex portions 22 for restricting the movement of the center belt in the width direction thereof with respect to the blocks are provided on the convex linear portions 20, 21 formed in at least either the upper surfaces 16 or the lower surfaces 17 of the grooves of the blocks. For example, as in Fig. 3 and Fig. 4, circular cylindrical or oval cylindrical projections 23 are provided on the top of the convex linear portions 20, 21. Thus provided, the projections 23 act as follows: When the center belts are fitted to the grooves of the blocks, then the projections 23 bite the elastomer material that constitute the center belts, and in that condition, the movement of the center belts with respect to the blocks may be strongly restricted, and even when the blocks have received force from a pulley while the belt is driven, the blocks may be prevented from vibrating and therefore the wear or heat generation at the blocks and the center belts may be thereby prevented.

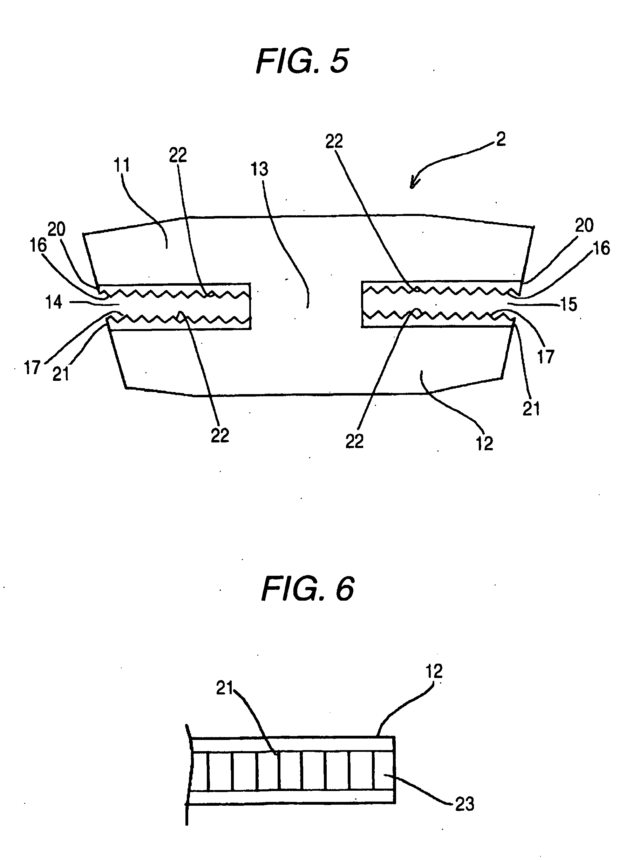

As in Fig. 5 and Fig. 6, another embodiment of the invention may be employed where waving concavo-convex portions 22 running as waving in the width direction of the belt or zigzag concavo-convex portions 22 are provided at the top of the convex linear portions 20, 21. Having the constitution, the concavo-convex portions 22 of the blocks 2 may bite the elastomer 4 that constitutes the center belts 3a, 3b, and in that condition, the movement of the center belts 3 a, 3b with respect to the blocks 2 may be strongly restricted, and even when the blocks 2 have received force from a pulley while the belt 1 is driven, the blocks 2 may be prevented from vibrating or running obliquely and therefore the wear or heat generation at the blocks 2 and the center belts 3a, 3b may be thereby prevented.

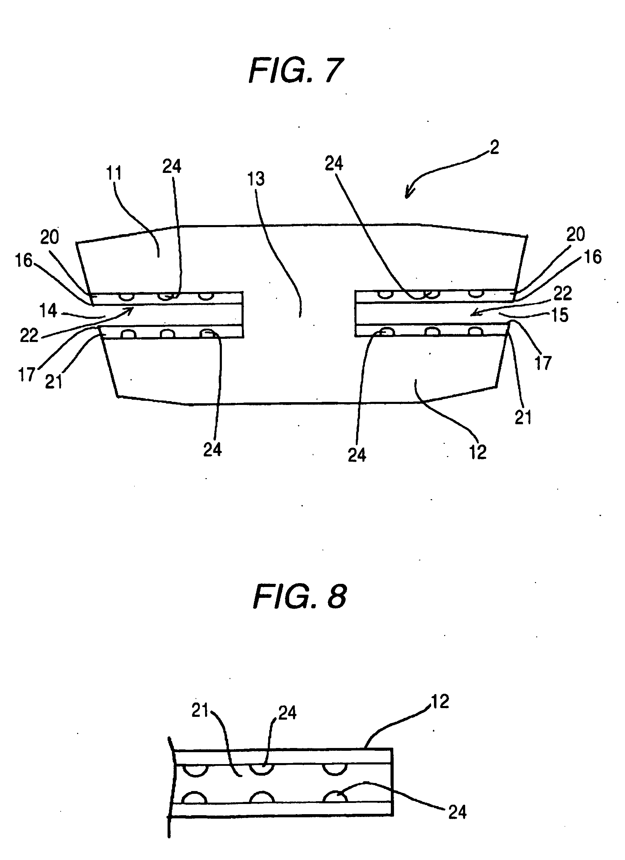

The disclosed examples further include still another variant of providing pipe-faced recesses 24 in the convex linear portions 20, 21 at the front and back surfaces thereof with respect to the longitudinal direction of the belt, as in Fig. 7 and fig. 8. Having the constitution, the center belts may get into the recesses 24 to thereby strongly restrict the movement of the center belts with respect to the blocks. When the movement of the center belts with respect to the blocks is desired to be restricted by the concavo-convex portions provided in the convex linear portions 20, 21 and when projections are provided on the convex linear portions 20, 21 for that purpose, then the center belts may hardly get in the projections, depending on the size of the projections, and even when having gotten therein, the center belts may cause heat generation while driven. However, when the recesses 24 are formed for the concavo-convex portions, as in Fig. 7 and Fig. 8, then the heat generation to be caused by the compression of the elastomer resulting from the bending of the belt may be small, and on the contrary, when the belt is bent, the compressed elastomer may escape into the recesses 24, therefore resulting in the prevention of heat generation. In addition, since the recesses 24 are provided in the convex linear portions 20, 21 at the front and back surfaces thereof with respect to the longitudinal direction of the belt, the convex linear portions 20, 21 do not have concavo-convex portions at their tops, and therefore the recesses 24 do not have any negative influence on the cores in that the alignment of the cores may be disturbed by them. This is another advantage of this embodiment in that the belt running may be stabilized.

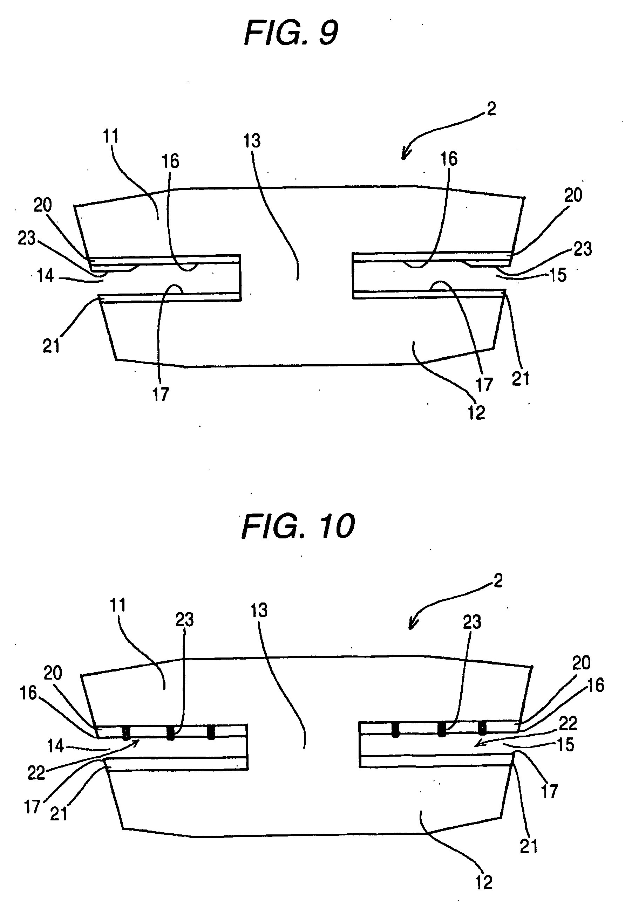

As the embodiment shown in Fig. 9, projections may be formed only on the edge side of the upper grooves 16 for the concavo-convex portions 22. Having the projections of the type, the blocks may interfere with the center belts, thereby restricting the movement of the center belts 3 with respect to the blocks 2, and as a result, even when the belt is driven, the movement of the center belts in the width direction thereof with respect to the blocks and the rotary vibration of the blocks that move in the direction before and behind the center belts may be prevented, therefore providing an effect that the friction between the two may be reduced.

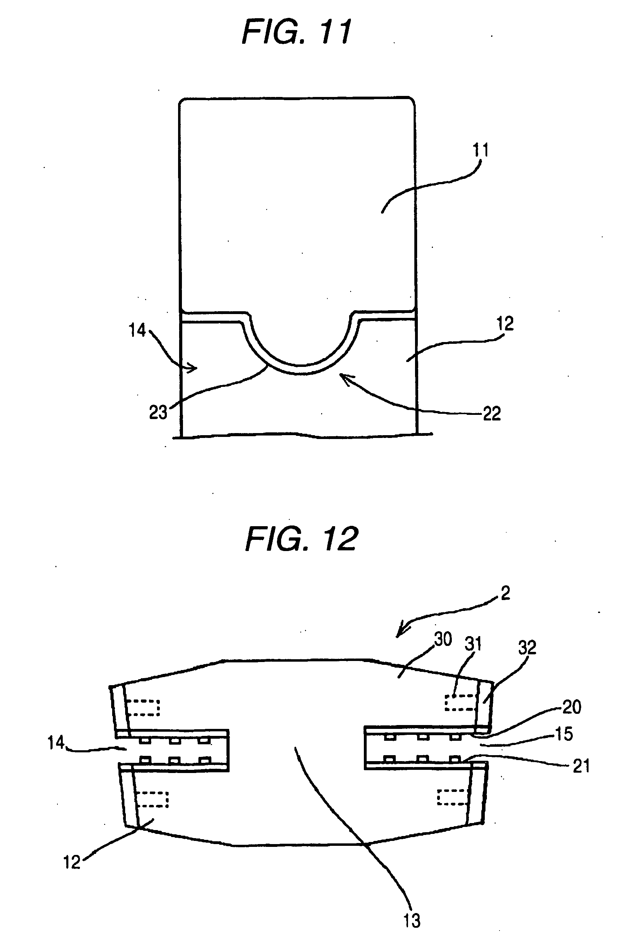

Fig. 10 and Fig. 11 show another example, in which projections 23 continuously extending in the longitudinal direction of the belt are provided at three sites including on the convex linear portions 20 in the upper groove surfaces 16 of the grooves 14, 15 of the blocks 2. Also in this example, the projections 23 bite the surfaces of the center belts 3a, 3b, thereby restricting the movement of the center belts 3a, 3b in the width direction thereof with respect to the blocks 2. As having the projections 23 extending in the longitudinal direction of the belt, this embodiment is more effective for restricting the movement of the constitutive elements.

Not shown, a wire or the like may be wound in a few places around the upper beams of the blocks so as to provide projections in the upper groove surfaces 16 including on the convex linear portions 20, whereby the projections may bet into the center belts 3a, 3b so as to act as the restricting parts for restricting the movement of the center belts in the width direction thereof with respect to the blocks.

In providing the concavo-convex portions in the manner as above for the above-mentioned purposes, the height D of the concavo-convex portions may fall preferably within a range of from 0.05 to 0.3 mm, more preferably from 0.05 to 0.2 mm. Regarding the shape thereof, the projections are preferably sharp-pointed in order that they could readily deform the center belts. Regarding the number of the projections to be provided, it is desirable that the number of the projection formed on one convex linear portion is from 1 to 10, or that of the recess formed thereon is from 1 to 10.

If the height between the concavo-convex portions is smaller than 0.05 mm, then the concavo-convex portions could not be sufficiently deform the center belts and therefore they may be poorly effective for restricting the movement of the center belts 3a, 3b with respect to the blocks 2; but if it is larger than 0.3 mm, then the effect of restricting the movement of the center belts 3a, 3b with respect to the blocks 2 may be large, but the thickness of the upper and lower beams could not be sufficiently ensured and the deformation of the blocks may be great, and, as a result, the contact between the blocks and a pulley may be problematic and the belt may be noises and its transmission efficiency may lower. In addition, the blocks may damage the center belts. Anyhow, such too deep or too high concavo-convex portions are unfavorable. When the number of the concavo-convex portions formed on one convex linear portion is larger than 10 and is too large, then each recess/projection may be too thin and they may be readily worn or broken or damaged, and, as a result, they may be ineffective for restricting the movement of the center belts 3a, 3b with respect to the blocks 2.

The block 2 in the invention may be formed of a resin material alone, or may have a structure with an insert material embedded therein that is prepared by coating a resin material around the surface of an insert material. In case where the blocks 2 used herein do not have an insert material embedded therein, then the belt comprising them may be more lightweight than the belt comprising blocks with an insert material embedded therein, and therefore the former is superior to the latter in that the centrifugal force to be given to the belt may be smaller even when the belt is rotated at high speed. Therefore, the former belt is favorable for high-revolution applications under relatively low load, for example, for motorcycles. However, since the belt of the type does not have an insert material, it is not so tough, and the upper and lower beams 11, 12 may be readily deformed, therefore the belt has a drawback in that the clamping between the blocks and the center belts may be readily loosened and wear and heat generation may occur between them.

In the block 2 prepared by coating the surface of an insert material with a resin material, the insert material have a shape of upper and lower beams with a pillar connecting them, which is nearly the same as that of the block, though not shown. The block of the type is so prepared that at least the site where the blocks are in contact with each other and the site where the blocks are in contact with a pulley are coated with a resin material. The insert material acts to give side pressure resistance and flexural rigidity to the block 2. Examples of materials of the insert material include aluminium alloys, ceramics, ceramic/aluminium composites, carbon fibers-reinforces resins, iron.

A metal material is preferred for giving side pressure resistance and flexural rigidity to the blocks. Of the metal material, aluminium alloys have an elastic modulus of 7000 kgf/mm² and a specific gravity of 2.8, and iron has an elastic modulus of 22000 kgf/mm² and a specific gravity of 7.8. In point of its mechanical strength, iron is preferred. However, for belts rotating at high speed, their weight may have a significant influence on their life. Accordingly, aluminium alloys are preferred for use herein from the viewpoint that the belt may be lightweight.

In case where a resin material is disposed in predetermined sites for coating them, then an insert material of a metal material that is one size smaller than the block 2 is used, and it may be nearly completely coated with a resin material. The entirely coated material is preferred to those partly coated with a resin material since the former may be free from a problem of peeling of the resin material. On the other hand, however, from the viewpoint of reducing the weight of the blocks, those partly coated with a resin material may be advantageous.

As the resin material, materials having a relatively large friction coefficient, high wear resistance and high rigidity when compared with the elastomer 4 constituting the center belts 3a, 3b can be used. Concretely, it includes rubbers and synthetic resins such as hard rubber, hard polyurethane resin, liquid-crystalline resin, phenolic resin, epoxy resin, polyester resin, acrylic resin, methacrylic resin, polyamide resin, polyamidimide (PAI) resin, polyphenylene sulfide (PPS) resin, polybutylene terephthalate (PBT) resin, polyimide (PI) resin, polyether sulfone (PES) resin, polyether-ether ketone (PEEK) resin, having a hardness of at least 90° JIS A.

Among them, preferred are thermoplastic resins in consideration of the fact that the blocks 2 are free from a problem of cracking and they are injection-moldable for their efficient production. In particular, more preferred are polyamide resins such as 4,6-nylon, 9T-nylon, 6,6-nylon, 6-nylon. Among such polyamide resins, even more preferred is 4,6-nylon from the viewpoint that its friction coefficient is low, its wear resistance is good, it is tough and is elastic to bending, and it does not readily break.

These resins may be reinforced through interfusion with woven fabrics of cotton fibers, chemical fibers such as polyamide fibers or aramid fibers, glass fibers, metallic fibers or carbon fibers or with inorganic materials such as fillers, whiskers, silica, calcium carbonate.

In the invention, a fibrous reinforcing material or whisker-like reinforcing material may be added to the resin material to form the blocks, as so mentioned hereinabove. The fibrous reinforcing material added thereto may increase the mechanical strength and the toughness of the resin, and the amount of the fibrous reinforcing material to be added to the resin is preferably from 1 to 60% by mass. If it is smaller than 1% by mass, then the fibers added may be almost ineffective for resin reinforcement; but if larger than 60% by mass, then the reinforced resin may be difficult to mold. If so, the hardness of the resin blocks may increase but the toughness thereof may lower, and therefore the blocks are unfavorable from the viewpoint of their impact resistance.

The fibrous reinforcing material that may be added to synthetic resin includes aramid fibers, carbon fibers, glass fibers, polyamide fibers, polyester fibers. Among them, preferred are carbon fibers. When combined with 4,6-nylon, a preferred example of the resin to constitute the blocks, carbon fibers may cancel the drawback of poor water absorbability of 4,6-nylon and may significantly improve the toughness thereof. In addition, combined with such carbon fibers, 4,6-nylon may favorably exhibit its good wear resistance, impact resistance and fatigue resistance.

When a whisker-like reinforcing material is combined with the fibrous reinforcing material for use herein, then it may further improve the mechanical strength of the reinforced blocks and may reduce the weight thereof, additionally further improving the wear resistance thereof The whisker-like reinforcing material includes zinc oxide whiskers, potassium titanate whiskers, aluminium borate whiskers. Of those, preferred are zinc oxide whiskers, as having a three-dimensional configuration of tetrapod-like hands that extend in four directions. They have good heat resistance and good wear resistance by themselves. In addition, as having the above-mentioned, tetrapod-like three-dimensional configuration, zinc oxide whiskers may inhibit the orientation of a fibrous reinforcing material when combined with it, and may therefore cancel the deformation of the resin material during molding and cancel the anisotropy thereof in molding contraction. For these reasons, zinc oxide whiskers are the most preferred. Further, since they may reduce the orientation of the fibrous reinforcing material combined with them, they may also reduce the anisotropy of the blocks 2 in point of the mechanical strength thereof such as toughness and flexural rigidity, and in addition, the friction coefficient of the blocks may be stabilized and the wear resistance thereof may be thereby improved. Moreover, since zinc oxide whiskers have a high specific gravity and are highly tough, they may reduce the vibration of the blocks when in contact with a pulley, and may be therefore effective for reducing the noise of the belt.

The amount of the whisker-like reinforcing material to be added may be from 1 to 30% by mass. If it is smaller than 1% by mass, then it is unfavorable since it is ineffective for improving the wear resistance of the blocks. On the other hand, if it is larger than 30% by mass, it is also unfavorable since it may be difficult to add the material to resin and the moldability of the resulting resin may be poor.

Apart from the above, at least one selected from molybdenum disulfide, graphite and fluororesin may be added to the blocks 2 so as to improve the lubricity of the blocks. Examples oft fluororesin include polytetrafluoroethylene (PTFE), polyfluoroethylene-propylene ether (PFPE), tetrafluoroethylene/hexafluoropropylene copolymer (PFEP), and polyfluoroalkoxyethylene (PFA).

When a whisker-like reinforcing material is added to the blocks as so mentioned hereinabove, then the blocks may be prevented from being worn owing to their friction against pulleys, but on the other hand, there still exists a problem in that the part of the center belt that is in contact with the blocks may be worn by the whiskers. Accordingly, the surfaces of the blocks that are in contact with a center belt may be formed of a thermoplastic resin composition not containing zinc oxide whiskers, but the surfaces thereof that are to be in contact with a pulley is formed of a thermoplastic resin composition containing a fibrous reinforcing material and zinc oxide whiskers whereby the wear of the blocks at their surfaces to be in contact with a pulley may be prevented and, in addition, the wear of the center belt may also be prevented.

In this case, it is not always necessary that the entire surfaces of the blocks to be in contact with a center belt are formed of a resin composition not containing whiskers, or the entire surfaces of the blocks to be in contact with a pulley are formed of a resin composition containing whiskers. For example, when the ratio of the surfaces of the blocks that are in contact with a center belt and comprise the thermoplastic resin composition not containing a whisker-like reinforcing material to the overall surfaces thereof in contact with the center belt is at least 70%, and the ratio of the surfaces of the blocks that are to be in contact with a pulley and comprise the thermoplastic resin composition containing a whisker-like reinforcing material to the overall surfaces thereof to be in contact with a pulley is at least 70%, then the above-mentioned effect may be attained.

In short, the parts of the blocks 2 that are in contact with a center belt are basically formed of a thermoplastic resin composition not containing whiskers, but the parts thereof to be in contact with a pulley while driven are formed of a thermoplastic resin composition containing a fibrous reinforcing material and whiskers, and in the respective overall surface areas, any others may be disposed within a range not overstepping 30%. One example of the blocks 2 is shown in Fig. 12.

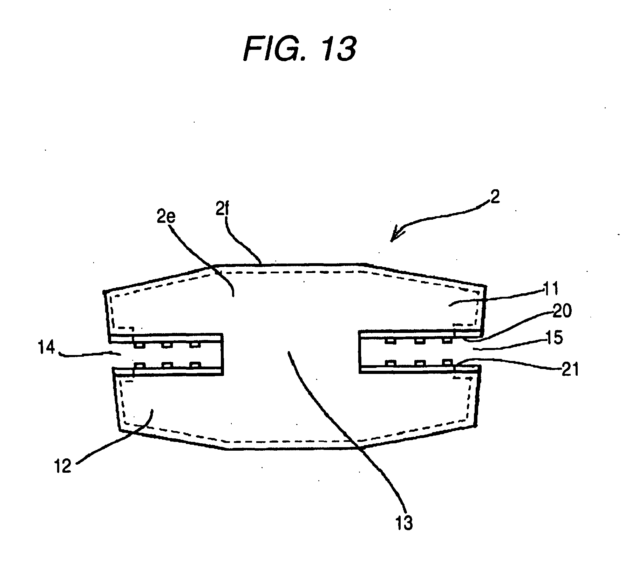

Fig. 12 shows an embodiment of the block 2 of the above invention of the item 12, in which the block body part 30 formed of a thermoplastic resin composition not containing a whisker-like reinforcing material comprises upper and lower beams 11, 12 that are to form the side surfaces of the block, and a pillar 13 that links the two at their center, and in the holes 31 formed at the edges of the upper and lower beams 11, 12 to form the side surfaces of the block, inserted is a contact member 32 that is to be in contact with a pulley, and the contact member 32 is formed of a thermoplastic resin composition containing a whisker-like reinforcing material. However, the blocks are not always limited to the shape as illustrated. Apart from it, the block 2 may comprise an insert material 2e formed of a thermoplastic resin composition not containing a whisker-like reinforcing material, in which the material 2e may be coated with a coating material 2f formed of a thermoplastic resin composition containing a whisker-like reinforcing material, as in Fig. 13. In this, the part of the engaging grooves 14, 15 that is to be in contact with a center belt 3 is not coated with the coating material 2f at all, and the insert material 2e is exposed out in this part.

The lower beam of the block 2 must be bent so that the belt may be wound around a pulley, and at least either the foreface or the back face of the block 2 in the belt running direction has an inclined surface. Thus having such an inclined surface, the blocks do not interfere with each other when the belt is bent while running around a pulley.

For the elastomer 4 to be used for the center belts 3a, 3b, herein usable is a single material of chloroprene rubber, natural rubber, nitrile rubber, styrene-butadiene rubber or hydrogenated nitrile rubber, or a blend rubber thereof, or a polyurethane rubber. For the core 5, usable is a rope formed of any material selected from polyester fibers, polyamide fibers, aramid fibers, glass fibers or steel wires. Apart from the core 5 that is formed of a rope spirally embedded in the belt, also usable is a woven fabric or a knitted fabric of the above-mentioned fibers or a thin metal plate.

The shape of the belt is not limited to one illustrated in Fig. 1, and the invention may be applied to any type of belt having openings at the sides of the blocks in which the center belt may move in the width direction of the belt. Though not shown, for example, in a belt comprising nearly U-shaped blocks in which a center belt is fitted into the grooves opened on the side faces on one side of the blocks, concavo-convex portions for restricting the movement of the center belt in the width direction thereof with respect to the belt and may be provided in at least either the convex linear portions provided in the upper groove surfaces or those provided in the lower groove surfaces, whereby the vibration or oblique running of the blocks may be prevented in the same manner as hereinabove and the wear and the heat generation between the blocks and the center belt may be prevented. In addition, the shape of the concavo-convex portions is not limited to those shown in Fig. 3, Fig. 5, Fig. 7, Fig. 9 and Fig. 10. For example, a large number of partly-spherical projections or recesses may be uniformly or non-uniformly disposed in the front surface of the convex linear portions; or a wire may be wound around a few portions of the upper beams of the blocks, as so mentioned hereinabove, whereby projections are provided on the upper groove surfaces 16 including on the convex linear portions 20 so that they may bite the center belts 3a, 3b, thereby restricting the movement of the center belts in the width direction thereof with respect to the blocks; or plural projections may be provided so that they may act as the restricting parts for both the longitudinal direction and the width direction of the belt.

In the invention, a fibrous member is disposed on the surface of the center belt 3 that is to be in contact with the blocks. Examples of the disposition of the fibrous member are that a cover canvas is adhered to and laminated on the upper and lower surfaces of the center belt; and short fibers are added to the elastomer to constitute the center belt 3 so that the edges of the short fibers are exposed out on the surface of the center belt.

In the example of Fig. 2, the center belts 3 have a cover canvas 10 on both the upper and lower surfaces thereof, whereby the center belts are protected from the friction between the center belts and the blocks that may be generated while the belt is driven. Having the constitution, the center belts 3 are prevented from being worn away. In the above embodiment, the blocks 2 have concavo-convex portions on the convex linear portions in the engaging grooves therein, as so mentioned hereinabove, and the blocks 2 are made to bite the center belts, and, as a result, the movement of the benter belts 3 with respect to the blocks 2 is thereby restricted. While driven, large force may be given to the center belts by the concavo-convex portions of the blocks and the center belts may be thereby abraded or deteriorated. However, since the cover canvas 10 is adhered to and disposed around the center belts so as to cover the upper and lower surfaces of the center belts, whereby the center belts are protected from the above-mentioned wear and therefore the center belts may be prevented from being loosened from the blocks and the belt failure owing to its cutting or breakage may be reduced.

In case where a whisker-like reinforcing material such as zinc oxide whiskers is incorporated in the resin to form the blocks, then there may be a problem in that the whisker-like reinforcing material may attack the center belts owing to the friction between the blocks and the center belts during driven and the center belts may be thereby worn away. However, since the above-mentioned cover canvas is disposed, it may solve the problem.

The woven fabric usable for the cover canvas 10 includes plain fabric, a twill fabric and a satin fabric. Regarding the material thereof, the short fibers that may be in the cover canvas 10 and the center belts may include aramid fibers, polyamide fibers and polyester fibers. Of those, aramid fibers are preferred. Concretely, aramid fibers may be used for at least the weft in the longitudinal direction of the belt to give the canvas fabric 10, with which the center belts may be more firmly protected and the life of the belt may be further prolonged. Aramid fibers may be either para-aramid fibers or meta-aramid fibers, for which, however, preferably used are multifilament yarns prepared by bundling individual fibers having a fineness of from 0.3 to 1.2 deniers. Apart from aramid fibers, also usable are mixed strands with polyamide fibers or urethane elastic yarns, in which, however, the proportion of the aramid fibers is preferably from 20 to 80% of the overall weight of the weft of the fabric. In case where the thickness of the individual fibers is smaller than 0.3 deniers, then it is unfavorable since the tensile strength of the cover canvas 10 in the longitudinal direction of the belt may be low and the wear resistance thereof may also be low. On the contrary, if the fibers are too thick, having a thickness of more than 1.2 deniers, then it is also unfavorable since the woven cover canvas 10 may be too tough and the warp and the weft therein could not be well balanced and the canvas may be readily wrinkled.

Para-aramid fibers are commercially available, for example, as Kevlar, Technora, Twaron; and meta-aramid fibers are also commercially available as Nomex, Conex.

Like the weft, the warp in the width direction of the belt may also comprise filaments of aramid fibers such as para-aramid fibers or meta-aramid fibers, for which, in addition, further usable are filaments of polyamide fibers such as 6-nylon, 6,6-nylon or 12-nylon, as well as those of polyvinyl alcohol fibers or polyester fibers.

For laminating and adhering a cover canvas 10 of the type thereto, a bonding treatment is carried out. The bonding treatment is, for example, with an RFL liquid, an isocyanate solution or an epoxy solution. The RFL liquid is prepared by mixing a precondensate of resorcinol and formalin in latex, in which the latex may be styrene-butadiene-pyridine tercopolymer, hydrogenated nitrile rubber, chlorosulfonated polyethylene or epichlorohydrin latex. Sizing treatment of applying a rubber paste, which is prepared by dissolving rubber in a solvent, to the surface of a cover canvas 10 is also employable for the bonding treatment.

In the bonding treatment, a friction coefficient-reducing material may be added to the bonding treatment agent such as RFL liquid, isocyanate solution, epoxy solution or rubber paste, whereby the friction coefficient between the blocks and the cover canvas of the center belt may be reduced and the wear of the center belt by the friction between the center belt and the blocks that contain whiskers such as zinc oxide whiskers may be prevented. Concretely, the friction coefficient-reducing agent includes fluororesins such as polytetrafluoroethylene, polytrifluoroethylene, tetrafluoroethylene-hexafluoropropylene copolymer, tetrafluoroethylene-perfluoroalkoxyethylene copolymer, tetrafluoroethylene-ethylene copolymer; and ceramic powder, glass beads, ultra-high-molecular-weight polyethylene, graphite, molybdenum disulfide, phenolic resin, glass fibers, carbon fibers, aramid fibers. Preferably used herein is at least one type of these, more preferably at least one type of ceramic powder, glass beads, ultra-high-molecular-weight polyethylene, graphite, molybdenum disulfide, fluororesin such as polytetrafluoroethylene and phenolic resin, even more preferably fluororesin such as polytetrafluoroethylene.

The center belt 3 has concave linear portions 18, 19 provided at a predetermined pitch on both the upper and lower surfaces thereof, therefore having a concavo-convex profile thereon so as to be able to engage with the blocks 2. In the invention, preferably, the cover canvas 10 has a ratio between a width before the bonding treatment and a width after the bonding treatment of from 55 to 70%, more preferably from 58 to 65% of the width of the unprocessed canvas. The canvas to be used for cover canvas is naturally flexible, but when being subjected to a bonding treatment, it shrinks. The canvas that shrinks more may be thicker; but on the contrary, the canvas that shrinks less may be thinner. In particular, when aramid fibers are used for the cover canvas 10, then the cover canvas may be tougher than those comprising any other fibers. When such a tough canvas is used for the cover canvas for the center belt, then the center belt could hardly follow the shape of the mold used in forming the convex linear portions on it owing to the high toughness thereof, and therefore the height and the shape of the groove/convex linear portion profile actually formed on the center belt could not be just the planned ones. Accordingly, the cover canvas 10 is so designed that its width after the bonding treatment could be from 55 to 70% of the width of the untreated canvas, as so mentioned hereinabove, whereby the thickness of the canvas is restricted so that it may well follow the shape of the mold to be used for forming the groove/convex linear portion profile on the center belt. If the numerical limit is less than 55%, then the canvas may shrink too much and the shrunk canvas may be too thick; and if so, the canvas could not follow the shape of the mold used in vulcanization, and the height and the shape of the groove/convex linear portion profile actually formed on the center belt could not be just the planned ones. On the other hand, if it is more than 70%, then the canvas may be poorly flexible and therefore the height and the shape of the groove/convex linear portion profile actually formed on the center belt could not also be just the planned ones. When the numerical range thereof is defined to fall within the range of from 55 to 70%, more preferably from 58 to 65%, then the canvas may satisfy both flexibility and mold followability.

A protective layer may be disposed on both the upper and lower surfaces of the center belt 3. A cover canvas such as that mentioned above is disposed on the surface of the center belt 3 so as to protect the center belt 3. In addition, when a protective layer is further disposed on it, the center belt may be more surely protected from the friction between the center belt and the blocks that may occur while the belt is driven. Having the constitution, the center belt 3 may be prevented from being worn away and the belt failure caused by breakage may be reduced.

The protective layer may be formed of a resin such as polyisocyanate resin, an urethane resin, epoxy resin, melamine resin, unsaturated polyester resin, silicone resin or fluororesin. In view of its good wear resistance and good heat resistance, the layer is preferably formed of a thermosetting resin. From the viewpoint of its good adhesiveness to the center belt 3, preferably used is a polyisocyanate resin or an urethane resin capable of curing in liquid. Apart from such resin materials, a metal plate layer may also be the protective layer. Concretely, electroless nickel plating may be given to the surface of the center belt, for which the center belt may be dipped in a plating bath whereby the intended protective layer may be readily formed thereon. Fluororesin particles may be added to the metal plate layer, and it is improves the lubricity between the blocks and the center belt to prevent the center belt from being worn away.

The fluororesin that may be added to the metal plate layer includes polytetrafluoroethylene resin (PTFE), tetrafluoroethylene/perfluoroalkoxyethylene copolymer resin (PFA), tetrafluoroethylene/hexafluoropropylene copolymer resin (PFEP), tetrafluoroethylene/ethylene copolymer resin (PETFE), polyvinylidene fluoride resin (PVDF), polyvinyl fluoride resin (PFV), chlorotrifluoroethylene resin (CTFE), ethylene/chlorotrifluoroethylene resin (ECTFE), ethylene/tetrafluoroethylene copolymer resin (PETFE). Of such fluororesins, preferred is polytetrafluoroethylene resin (PTFE) as effective for improving the wear resistance of the layer and for reducing heat generation.

Preferably, the thickness of the protective layer is from 1 to 100 µm, more preferably from 10 to 50 µm. If less than 1 µm, then it is unfavorable since the layer may be readily worn and peeled away owing to its friction against blocks; but if more than 100 µm, then it is also unfavorable since the layer may be too thick and may be poorly flexible.

A method of forming the protective layer on the center belt 3 is not specifically defined. An example of using a thermosetting resin is described. A center belt 3 is dipped in an uncrosslinked liquid resin so that the liquid may be applied to the entire surface of the belt and then it is crosslinked and cured thereon. The thickness of the resin layer to be formed on the belt may be restricted depending on the viscosity of the resin in which the belt is dipped. As the case may be, the belt may be dipped two or more times in resin so as to ensure the necessary thickness of the resin layer to be formed thereon.

In the example of Fig. 2, a protective layer is formed on the surface of an elastomer 4. Apart from it, a cover canvas may be laminated on the elastomer 4 and a protective layer may be provided thereon, and this may also exhibit the effect of the invention similarly to the above.

### EXAMPLES

The present invention is now illustrated in greater detail with reference to Examples and Comparative Examples, but it should be understood that the present invention is not to be construed as being limited thereto.

Power transmission belts of Examples, and power transmission belts of Comparative Examples were are prepared as shown in the following Tables 2, 4, 6 and 8 and subjected to a durability test where they were actually driven under the condition shown in Tables 1, 3, 5 and 7.

### Example 1

The power transmission belt of Example 1 was one using a belt shown in Fig. 1, in which grooves were formed on both sides of the blocks and zigzag concavo-convex portions were provided on the upper surfaces of the grooves formed on the upper beam side, as in Figs. 5, 6, and in which the uniform concavo-convex portions having a height of 0.15 mm were provided on all the four convex linear portions. The resin for the blocks was 4,6-nylon containing 30% by mass of carbon fibers. For the cores in the center belts, used were aramid fibers; and for the elastomer of the center belts, used was hydrogenated nitrile rubber. A cover canvas in which the weft in the longitudinal direction of the belt is aramid fibers was provided on the surfaces of the center belts. The details of the belts and the results of the durability test of the belts are shown in Table 1; and the running condition is shown in Table 2.

### Example 2

The power transmission belt of Example 2 was one using a belt shown in Fig. 1, in which concavo-convex portions were formed by providing recesses on the front and back surfaces of the convex linear portions on the upper surfaces of the grooves formed on both sides of the blocks as in Figs. 7, 8, and in which the uniform concavo-convex portions having a height of 0.15 mm were provided on all the four convex linear portions. The resin for the blocks was 4,6-nylon containing 30% by mass of carbon fibers. For the cores in the center belts, used were aramid fibers; and for the elastomer of the center belts, used was hydrogenated nitrile rubber. A cover canvas in which the weft in the longitudinal direction of the belt is aramid fibers was provided on the surfaces of the center belts. The details of the belts and the results of the durability test of the belts are shown in Table 1; and the running condition is shown in Table 2.

### Example 3

In Example 3, the same belt as in Example 1 except that a cover canvas formed of nylon fibers was provided on the surfaces of the center belts was used. The running condition is shown in Table 2. The details of the belts and the results of the durability test of the belts are shown in Table 1; and the running condition is shown in Table 2.

### Comparative Example 1

In Comparative Example 1, the same belt as in Example 1 except that concavo-convex portions were not provided on the convex linear portions was used. The details of the belts and the results of the durability test of the belts are shown in Table 1; and the running condition is shown in Table 2.

### Comparative Example 2

In Comparative Example 2, the same belt as in Example 3 except that concavo-convex portions were not provided on the convex linear portions was used. The details of the belts and the results of the durability test of the belts are shown in Table 1; and the running condition is shown in Table 2.

**Table 1**

| | Example 1 | Example 2 | Example 3 | Comparative Example 1 | Comparative Example 2 |
|---|---|---|---|---|---|
| Belt Size | width: 18 mm peripheral length: 690 mm block pitch: 3mm | width: 18 mm peripheral length: 690 mm block pitch: 3mm | width: 18 mm peripheral length: 690 mm block pitch: 3mm | width: 18 mm peripheral length: 690 mm block pitch: 3mm | width: 18 mm peripheral length: 690 mm block pitch: 3mm |
| Material of Blocks | 4,6-nylon | 4,6-nylon | 4,6-nylon | 4,6-nylon | 4,6-nylon |
| Carbon Fibers [mas%] | 30 | 30 | 30 | 30 | 30 |
| Whiskers [mas%] | - | - | - | - | - |
| Presence or Absence of Concavo-convex portions on Convex linear portions | yes | yes | yes | no | no |
| Cover Canvas | aramid | aramid | nylon | aramid | nylon |
| Engagement between Blocks and Center Belts | loosened little | loosened little | loosened a little | much loosened | much loosened |
| Life Time [hr] | 500 test longer than 500 hrs stopped | 500 test longer than 500 hrs stopped | 280 | 231 | 150 |
| Trouble | - | - | center belts cut | lower beams of blocks broken | lower beams of blocks broken |
| Result | excellent | excellent | good | not good | very bad |

**Table 2**

| | |
|---|---|
| Dr Pulley | W18 × V26 × D50 |
| Dn Pulley | W18 × V26 × D110 |
| Axial Load [N] | 1470 |
| Dr Revolution [rpm] | 6000 |
| Dn Revolution [rpm] | 2727 |
| Ambient Temperature [°C] | 100 |
| Dr Torque [N·m] | 29 |
| Dn Torque [N·m] | - |

The results in Table 1 confirm the following: In Examples 1 and 2 where concavo-convex portions were provided on the convex linear portions on the upper surfaces of the grooves of the blocks, no accident occurred in the belts after driven for 500 hours; but in Comparative Example 1, the lower beams of the blocks were broken after driven for 231 hours. This is because the blocks and the center belts engaged with each other was loosened and moved, whereby the blocks would have been broken. In Example 3, the center belts were cut after driven for 280 hours. In this, concavo-convex portions were provided in the blocks and therefore the belt is better than that of Comparative Example 1. In this, however, since nylon was used for the cover canvas, the center belts were cut in earlier stages than in Examples 1 and 2.

### Examples 4 to 9

In the following Examples, zinc oxide whiskers were added to the resin to form the blocks so as to confirm the wear resistance of center belts against the blocks. Power transmission belts were prepared as in Table 3, and tested in a running test. After the test, the condition of the cover canvas of the surface of each center belt and the condition of the engagement between the center belts and the blocks were observed and checked. The wear of the block (upper width change) was measured.

Regarding the shape of the blocks of the power transmission belts prepared and tested in Examples 4 to 9, the blocks have concavo-convex portions on the convex linear portions of the upper surfaces of the grooves therein, as in Fig. 3. In these Examples, the constitution of the cover canvas of the surfaces of the center belts was changed as in Table 3.

The resin for the blocks comprises 4,6-nylon and carbon fibers and zinc oxide whiskers, in which the proportion of the carbon fibers is 30% by mass and that of the zinc oxide whiskers is 10% by mass. In Example 7 and Example 9, zinc oxide whiskers were not added. The details of the belts and the results of the durability test of the belts are shown in Table 3; and the running condition is shown in Table 4.

The amount of wear (width change) of the blocks was measured as follows: After tested in the running test, the blocks were taken out from the belt and their shape was analyzed using a projector.

**Table 3**

| | Example 4 | Example 5 | Example 6 | Example 7 | Example 8 | Example 9 |
|---|---|---|---|---|---|---|
| Belt Size | width: 18 mm peripheral length: 891 mm block pitch: 3mm | width: 18 mm peripheral length: 891 mm block pitch: 3mm | width: 18 mm peripheral length: 891 mm block pitch: 3mm | width: 18 mm peripheral length: 690 mm block pitch: 3mm | width: 18 mm peripheral length: 891 mm block pitch: 3mm | width: 18 mm peripheral length: 891 mm block pitch: 3mm |
| Material of Blocks | 4,6-nylon | 4,6-nylon | 4,6-nylon | 4,6-nylon | 4,6-nylon | 4,6-nylon |
| Carbon Fibers [mas%] | 30 | 30 | 30 | 30 | 30 | 30 |
| Whiskers [mas%] | 10 | 10 | 10 | - | 10 | - |
| Constitution of Cover Canvas | | | | | | |
| Warp | nylon | nylon | nylon | nylon | nylon | nylon |
| Weft | para-aramid nylon urethane elastic fibers | para-aramid urethane elastic fibers | meta-aramid urethane elastic fibers | meta-aramid urethane elastic fibers | nylon urethane elastic fibers | nylon urethane elastic fibers |
| Life Time [hr] | 500 test longer than 500 hrs stopped | 500 test longer than 500 hrs stopped | 500 test longer than 500 hrs stopped | 500 test longer than 500 hrs stopped | 200 cut | 300 test longer than 300 hrs stopped |
| Wear of Blocks width change [mm] | 0.1 | 0.1 | 0.1 | 0.5 | 0.05 | 0.5 |
| Condition of Cover Canvas | no change | no change | cracked a little | no change | much cracked | much cracked |
| Engagement between Blocks and Center Belts | loosened little | loosened little | loosened a little | loosened little | much loosened | much loosened |
| Result | excellent | excellent | good | good | not good | good |

**Table 4**

| | |
|---|---|
| Dr Pulley | W18 × V26 × D130 |
| Dn Pulley | W18 × V26 × D90 |
| Axial Load [N] | 1000 ± 80 |
| Dr Revolution [rpm] | 8000 |
| Dn Revolution [rpm] | 10000 |
| Ambient Temperature [°C] | 100 |
| Dr Torque [N·m] | 29 |
| Dn Torque [N·m] | - |

The results in Table 3 confirm the following: In Examples 4 to 7 where aramide fibers were used for the weft of the cover canvas, the cover canvas did not change at all or were cracked only a little even after driven for 500 hours. However, in Example 8 where the cover canvas was a nylon canvas not containing aramid fibers, the cover canvas was cracked largely after driven for 200 hours, and the belt was cut.

In Example 9, the cover canvas was a nylon canvas and the resin for the blocks did not contain zinc oxide whiskers. In this, owing to the friction against the concavo-convex portions of the blocks, the cover canvas was cracked and the belt was cut after 300 hours. In this, in addition, since the blocks did not contain whiskers, their wear was 0.5 mm and was large, and the engagement between the blocks and the center belts was much loosened.

Example 6 differs from Examples 4 and 5 in that the weft of the cover canvas in the former was meta-aramid fibers but that of the cover canvas in the latter was para-aramid fibers. In Example 6, the cover canvas cracked a little after driven for 500 hours, which confirms that para-aramid fibers are better than meta-aramid fibers for use herein. In Example 7, whiskers were not added to the blocks, and therefore the wear of the blocks was large.

In the following Examples, belts having a protective layer to cover the surface of the center belts thereof were compared with those not having it.

### Example 10

The power transmission belt of Example 10 was one as shown Fig. 1, in which the resin material for the blocks is 4,6-nylon containing 30% by mass of carbon fibers and 10% by mass of zinc oxide whiskers. In this, the center belts had a core 5 of aramid fibers, the elastomer 4 was chloroprene rubber, and a cover canvas of aramid fibers covered the center belts. Regarding the size of the belt, the belt pitch width was 18 mm, the pitch peripheral length was 690 mm, and the block pitch was 3 mm. Projections as in Fig. 3 were provided on the convex linear portions in the upper surfaces of the grooves of the blocks. In this, the step of dipping the center belts in a liquid urethane resin and curing the resin around them was repeated three times to form a protective layer having a thickness of about 30 µm around the center belts. The details of the belts and the results of the durability test of the belts are shown in Table 5; and the running condition is shown in Table 6.

### Example 11

In Example 11, a belt was prepared in the same manner as in Example 10 except that the protective layer on the surfaces of the center belts was formed of polytetrafluoroethylene (PTFE) in a mode of plating. The details of the belts and the results of the durability test of the belts are shown in Table 5; and the running condition is shown in Table 6.

### Example 12

In Example 12, a belt was prepared in the same manner as in Example 10 except that a protective layer was not formed on the surfaces of the center belts. The details of the belts and the results of the durability test of the belts are shown in Table 5; and the running condition is shown in Table 6.

**Table 5**

| | Example 10 | Example 11 | Example 12 |
|---|---|---|---|
| Belt Size | width: 18 mm peripheral length: 690 mm block pitch: 3mm | width: 18 mm peripheral length: 690 mm block pitch: 3mm | width: 18 mm peripheral length: 690 mm block pitch: 3mm |
| Material of Blocks | 4,6-nylon | 4,6-nylon | 4,6-nylon |
| Carbon Fibers [mas%] | 30 | 30 | 30 |
| Whiskers [mas%] | 10 | 10 | 10 |
| Protective Layer | yes | yes | no |
| Material of Protective Layer | urethane | PTFE | - |
| Life Time [hr] | 500 test longer than 500 hrs stopped | 500 test longer than 500 hrs stopped | 500 test longer than 500 hrs stopped |
| Remarks | - | - | loosened owing to the wear of center belts |
| Result | excellent | excellent | good |

**Table 6**

| | |
|---|---|
| Dr Pulley | W18 × V26 × D100 |
| Dn Pulley | W18 × V26 × D70 |
| Axial Load [N] | 1470 |
| Dr Revolution [rpm] | 8000 |
| Dn Revolution [rpm] | 12429 |
| Ambient Temperature [°C] | 100 |
| Dr Torque [N·m] | 29.4 |
| Dn Torque [N·m] | - |

The results in Table 5 confirm the following: The belt in Example 12 not having a protective layer ran for 500 hours, in which, however, the blocks and the center belts were loosened owing to the wear of the center belts. In Examples 10 and 11, however, no change was found in the belts after run for 500 hours, and the belts could further run. This means that the center belts in these were protected by the protective belt and the life of the belts was thereby prolonged.

### Examples 13 to 16

Power transmission belts were prepared as in Table 7, and subjected to a running test, in which the blocks were checked for cracking, the wear of the side surfaces of the blocks was measured, and the engagement between the blocks and the center belts were checked for loosening.

In the power transmission belts prepared herein, the blocks had concavo-convex portions in the convex linear portions on the upper surfaces of the grooves thereof, as in Fig. 3, and assembled as in Fig. 1. In these, the insert material and the coating material for the blocks were changed as in Table 7, and these were power transmission belts of Examples 13 to 16. In Examples 15 and 16, the blocks were formed of a resin of one type, or that is, these were not produced by coating an insert material with a coating material.

The center belts 3a, 3b used herein are common to all the belts of these Examples. Briefly, the core 5 was formed of aramid fibers, the elastomer 4 was formed of chloroprene rubber, and a cover canvas in which the weft in the longitudinal direction was formed of aramid fibers was provided on the surfaces of the center belts. The belt size is as follows: In Example 13, Example 15 and Example 16, the belt pitch width was 18 mm, the pitch peripheral length was 831 mm, the block pitch was 3 mm. Only in Example 14, the belt pitch width was 25 mm, the pitch peripheral length was 690 mm, the block pitch was 3 mm.

As the thermoplastic resin composition A, one comprising 4,6-nylon and 30% by mass of short carbon fibers without containing whiskers was used. As the thermoplastic resin composition B, one comprising 4,6-nylon, 30% by mass of short carbon fibers and 10% by mass of zinc oxide whiskers was used. The thermosetting resin composition used herein was prepared by adding 50% by mass of PAN carbon fibers and 15% by mass of graphite to diaryl phthalate resin.

The amount of wear of the side surfaces of the blocks was measured as follows: After tested in the running test, the blocks were taken out from the belt and their shape was analyzed using a projector. The details of the belts and the results of the durability test of the belts are shown in Table 7; and the running condition is shown in Table 8.

**Table 7**

| | Example 13 | Example 14 | Example 15 | Example 16 |
|---|---|---|---|---|
| Belt Size | width: 18 mm peripheral length: 831 mm block pitch: 3mm | width: 25 mm peripheral length: 690 mm block pitch: 3mm | width: 18 mm peripheral length: 831 mm block pitch: 3mm | width: 18 mm peripheral length: 831 mm block pitch: 3mm |
| Insert Material | thermoplastic resin composition A | aluminium | no | no |
| Coating Material | thermoplastic resin composition B | thermosetting resin composition B | thermoplastic resin composition A | thermoplastic resin composition B |
| Cracking of Blocks | no change | no change | no change | partly cracked |
| Wear of Blocks width change [mm] | 0.1 mm | 0.2 mm | 0.5 mm | 0.1 mm |
| Condition of Engagement | no change | much loosened | loosened a little | loosened a little |
| Life Time [hr] | 500 test longer than 500 hrs stopped | 500 test longer than 500 hrs stopped | 500 test longer than 500 hrs stopped | 500 test longer than 500 hrs stopped |
| Result | excellent | good | good | good |

**Table 8**

| | |
|---|---|
| Dr Pulley | W18 × V26 × D81 |
| Dn Pulley | W18 × V26 × D81 |
| Axial Load [N] | 1000 ± 80 |
| Dr Revolution [rpm] | 13000 |
| Dn Revolution [rpm] | 13000 |
| Ambient Temperature [°C] | 100 |
| Dr Torque [N·m] | 29 |
| Dn Torque [N·m] | - |

The results in Table 7 confirm the following: In Examples 13 to 16, the life of the belts tested in the running test was 500 hours or more. In Example 13, the blocks were not cracked and no change was found in the belt. The wear was small and the engagement between the blocks and the center belts was not loosened. The thermoplastic resin composition A not containing zinc oxide whiskers and the thermoplastic resin composition B containing zinc oxide whiskers were used separately for the insert material and for the coating material so that the part of the blocks to be in contact with the center belts could be formed of the thermoplastic resin composition A and the part thereof to be in contact with a pulley could be formed of the thermoplastic resin composition B, and the specific disposition of the resin compositions in fabricating the blocks was effective.

In Example 14, the wear of the blocks was small, but the engagement of the blocks and the center belts was loosened. This may be because the weight of the belt is large and a large centrifugal force would have been given to the center belts.

In Example 15, the blocks were completely formed of the resin not containing whiskers. Therefore, the blocks were worn away and the engagement between the blocks and the center belts was loosened a little.

In Example 16, the blocks were completely formed of the resin containing whiskers. Therefore, the wear of the blocks was small. However, the blocks were partly cracked and the cracked blocks abraded the center belts, and as a results, the center belts were loosened a little from the blocks. These may be problematic in that the center belts may be after all broken or cut.

The above results confirm the following: When the thermoplastic resin composition B containing whiskers and the thermoplastic resin composition A not containing whiskers are separately used in forming the insert material and the coating material, respectively, as in the invention, so that the part of the blocks to be in contact with the center belts could be formed of the thermoplastic resin composition A and the part thereof to be in contact with a pulley could be formed of the thermoplastic resin composition B, then it was found that the power transmission belt prepared as above was free from a problem of wear of the center belts and the blocks owing to the friction between them.

While the present invention has been described in detail and with reference to specific embodiments thereof, it will be apparent to one skilled in the art that various changes and modifications can be made therein without departing from the scope thereof.

The present application is based on Japanese Patent Applications No. 2005-128698 filed on April 26, 2005, No. 2005-312078 filed on October 27, 2005, and No. 2006-51388 filed on February 28, 2006, and the contents thereof are hereby explicitly referred to.

### INDUSTRIAL APPLICABILITY

The invention is applicable to production of belts for large torque transmission through change of the effective diameter of pulleys, for example, in continuously variable transmission for vehicles, motorcycles or agricultural machines.

## Claims

1. A power transmission belt (1) for transmitting high loads, comprising:
a center belt (3a, 3b) comprising:
an elastomer (4); and
a core (5) embedded in the elastomer (4); and
a block (2) comprising:
an upper beam (11);
a lower beam (12); and
a pillar (13) connecting the upper beam (11) and the lower beam (12) so as to
form a groove (14, 15) to fit therein the center belt (3a, 3b),
at least one of the block (2) and the center belt (3a, 3b) having a restricting part for restricting movement of the center belt (3a, 3b) with respect to the block (2) in both the longitudinal direction and the width direction of the center belt (3a, 3b),
the center belt (3a, 3b) having a fibrous member (10) at least in a portion of a surface being in contact with the block (2)
wherein the block (2) has a first restricting part including convex linear portions (20, 21), provided on an upper surface (16) and a lower surface (17) of the groove (14, 15), formed in the width direction of the center belt (3a, 3b), the center belt (3a, 3b) has a second restricting part including concave linear portions (18, 19), provided on an upper surface and a lower surface (6, 7) of the center belt (3a, 3b), formed in the width direction of the center belt (3a, 3b),
the convex linear portions (20, 21) and the concave linear portions (18, 19) engage with each other to restrict the movement in the longitudinal direction,
wherein the first restricting part further includes a concavo-convex portion (22) provided on at least one of an upper surface (16) and a lower surface (17) of the groove (14, 15), and the concavo-convex portion (22) deforms the center belt (3a, 3b) to restrict the movement in the width direction, **characterized in that**
the concavo-convex portion (22) includes at least one projection (23) provided on the top of at least one of the convex linear portions (20, 21).

2. The power transmission belt (1) for transmitting high loads according to claim 1,
wherein the concavo-convex portion (22) includes recesses (24) provided on both front and back surfaces of at least one of the convex linear portions (20, 21) with respect to the longitudinal direction of the center belt (3a, 3b).

3. The power transmission belt (1) for transmitting high loads according to claim 1 or 2,
wherein the concavo-convex portion includes zigzag recesses (24) and projections (23) provided on the top of at least one of the convex linear portions (20, 21).

4. The power transmission belt (1) for transmitting high loads according to any one of claims 1 to 3,
wherein the concavo-convex portion (22) includes a projection (23) provided on at least one end portion of the convex linear portions (20, 21).

5. The power transmission belt (1) for transmitting high loads according to any one of the preceding claims,
wherein the concavo-convex portion (22) includes a projection (23) continuously extending in the longitudinal direction of the center belt (3a, 3b).

6. The power transmission belt (1) for transmitting high loads according to any one of the preceding claims,
wherein the concavo-convex portion (22) has a height of 0.05 to 0.3 mm.

7. The power transmission belt (1) for transmitting high loads according to any one of the preceding claims,
wherein the fibrous member is a cover canvas (10) covering a surface of the center belt (3a, 3b) and
wherein the cover canvas (10) are provided on the upper (6) and lower surfaces (7) of the center belt (3a, 3b) and
at least weft in the longitudinal direction of the center belt (3a, 3b) is an aramid fiber.

8. The power transmission belt (1) for transmitting high loads according to claim 7,
wherein a bonding treatment is carried out on the cover canvas (10), and a bonding treatment agent contains a friction coefficient-reducing material.

9. The power transmission belt (1) for transmitting high loads according to claim 8,
wherein the cover canvas (10) has a ratio of a width before the bonding treatment to a width after the bonding treatment of 55 to 70%.

## Patentansprüche

1. Zugmittel (1) zur Übertragung hoher Lasten, aufweisend:
einen Zentralgurt (3a, 3b) aufweisend:
ein Elastomer (4); und
einen, in dem Elastomer (4) eingebetteten, Kern (5); und
einen Block (2) aufweisend:
einen oberen Balken (11);
einen unteren Balken (12); und
einen Holm (13), der den oberen Balken (11) und den unteren Balken (12) derart verbindet, dass eine Fuge (14, 15), in welcher der Zentralgurt (3a, 3b)
befestigt ist, gebildet wird,
wobei der Block (2) und/oder der Zentralgurt (3a, 3b) ein Begrenzungsteil aufweisen, die Bewegung des Zentralgurtes (3a, 3b) relativ zum Block (2), sowohl in der longitudinalen Richtung als auch in der Breite des Zentralgurtes (3a, 3b), begrenzend,
wobei der Zentralgurt (3a, 3b), wenigstens in dem Teil einer Oberfläche, die in Kontakt mit dem Block (2) steht, ein faseriges Teil (10) aufweist
wobei der Block (2) ein erstes Begrenzungsteil mit konvexen, linearen Abschnitten (20, 21), welche an einer oberen Oberfläche (16) und einer unteren Oberfläche (17) der Fuge (14, 15) vorgesehen und in der Breite des Zentralgurtes (3a, 3b) gebildet sind, aufweist,
wobei der Zentralgurt (3a, 3b) ein zweites Begrenzungsteil mit konkaven, linearen Abschnitten (18, 19), welche an einer oberen Oberfläche und einer unteren Oberfläche (6, 7) der Fuge des Zentralgurtes (3a, 3b) vorgesehen und in der Breite des Zentralgurtes (3a, 3b) gebildet sind, aufweist,
wobei die konvexen, linearen Abschnitte (20, 21) und die konkaven, linearen Abschnitte (18, 19) miteinander in Eingriff sind, um die Bewegung in die Längsrichtung zu begrenzen,
wobei das erste Begrenzungsteil ferner einen konkavkonvexen Abschnitt (22), welcher an einer oberen Oberfläche (16) und/oder einer unteren Oberfläche (17) der Fuge (14, 15) gebildet ist, aufweist, wobei der konkav-konvexe Abschnitt (22) den Zentralgurt deformiert (3a, 3b) um die Bewegung in die Breite zu begrenzen, **dadurch gekennzeichnet dass**
der konkav-konvex Abschnitt (22) mindestens einen Vorsprung (23), der auf mindestens einem der konvexen, linearen Abschnitte (20, 21) vorgesehen ist, aufweist.

2. Zugmittel (1) zur Übertragung hoher Lasten gemäß Anspruch 1, wobei der konkav-konvex Abschnitt (22) Mulden (24), vorgesehen sowohl an der vorderen als auch der hinteren Oberfläche von mindestens einem der konvexen, linearen Abschnitte (20, 21), bezüglich der longitudinalen Richtung des Zentralgurtes (3a, 3b), aufweist.

3. Zugmittel (1) zur Übertragung hoher Lasten gemäß Anspruch 1 oder 2, wobei der konkav-konvex Abschnitt ZickZack-Mulden (24) und Ansätze (23), vorgesehen an mindestens einem der konvexen, linearen Abschnitte (20, 21), aufweist.

4. Zugmittel (1) zur Übertragung hoher Lasten gemäß Anspruch 1 bis 3,
wobei der konkav-konvex Abschnitt (22) einen Absatz (23), vorgesehen an wenigstens einem Endabschnitt der konvexen, linearen Abschnitte (20, 21), aufweist.

5. Zugmittel (1) zur Übertragung hoher Lasten gemäß einem der vorangegangenen Ansprüche,
wobei der konkav-konvex Abschnitt (22) einen Ansatz (23), welcher sich kontinuierlich in die longitudinale Richtung des Zentralgurtes (3a, 3b) erstreckt, aufweist.

6. Zugmittel (1) zur Übertragung hoher Lasten gemäß einem der vorangegangenen Ansprüche,
wobei der konkav-konvex Abschnitt (22) eine Höhe von 0,05 bis 0,3 mm aufweist.

7. Zugmittel (1) zur Übertragung hoher Lasten gemäß einem der vorangegangenen Ansprüche,
wobei das faserige Teil ein Abdeckgewebe (10) ist, die den Zentralgurt (3a, 3b) abdeckt und
wobei das Abdeckgewebe (10) an den oberen (6) und unteren (7) Oberflächen des Zentralgurtes (3a, 3b) vorgesehen ist, und
mindestens der Schuss in der longitudinalen Richtung des Zentralgurtes (3a, 3b) eine Aramidfaser ist.

8. Zugmittel (1) zur Übertragung hoher Lasten gemäß Anspruch 7, wobei eine Verbindungsbehandlung auf dem Abdeckgewebe (10) ausgeführt ist und ein Verbindungsbehandlungsmittel ein, den Reibungskoeffizienten reduzierendes Material enthält.

9. Zugmittel (1) zur Übertragung hoher Lasten gemäß Anspruch 8, wobei das Abdeckgewebe (10) ein Verhältnis einer Dicke vor der Verbindungsbehandlung zu einer Dicke nach der Verbindungsbehandlung von 55 bis 70 % aufweist.

## Revendications

1. Courroie de transmission de puissance (1) pour transmettre des charges élevées, comprenant :
une courroie centrale (3a, 3b) comprenant :
un élastomère (4) ; et
une âme (5) noyée dans l'élastomère (4) ; et
un bloc (2) comprenant :
une poutre supérieure (11) ;
une poutre inférieure (12) ; et
un pilier (13) raccordant la poutre supérieure (11) et la poutre inférieure (12) afin de former une rainure (14, 15) pour adapter à l'intérieur de cette dernière, la courroie centrale (3a, 3b),
au moins l'un parmi le bloc (2) et la courroie centrale (3a, 3b) ayant une partie de restriction pour limiter le mouvement de la courroie centrale (3a, 3b) par rapport au bloc (2) à la fois dans la direction longitudinale et dans le sens de la largeur de la courroie centrale (3a, 3b),
la courroie centrale (3a, 3b) ayant un élément fibreux (10) au moins dans une partie d'une surface qui est en contact avec le bloc (2),
dans laquelle le bloc (2) a une première partie de restriction comprenant des parties linéaires convexes (20, 21), prévues sur une surface supérieure (16) et une surface inférieure (17) de la rainure (14, 15), formées dans le sens de la largeur de la courroie centrale (3a, 3b),
la courroie centrale (3a, 3b) a une deuxième partie de restriction comprenant des parties linéaires concaves (18, 19), prévues sur une surface supérieure et une surface inférieure (6, 7) de la courroie centrale (3a, 3b), formées dans le sens de la largeur de la courroie centrale (3a, 3b),
les parties linéaires convexes (20, 21) et les parties linéaires concaves (18, 19) se mettent en prise pour limiter le mouvement dans la direction longitudinale,
dans laquelle la première partie de restriction comprend en outre une partie concavo-convexe (22) prévue sur au moins l'une parmi une surface supérieure (16) et une surface inférieure (17) de la rainure (14, 15) et la partie concavo-convexe (22) déforme la courroie centrale (3a, 3b) pour limiter le mouvement dans le sens de la largeur, **caractérisée en ce que** :
la partie concavo-convexe (22) comprend au moins une saillie (23) prévue sur la partie supérieure d'au moins l'une des parties linéaires convexes (20, 21).

2. Courroie de transmission de puissance (1) pour transmettre des charges élevées selon la revendication 1,
dans laquelle la partie concavo-convexe (22) comprend des évidements (24) prévus à la fois sur les surfaces avant et arrière d'au moins l'une des parties linéaires convexes (20, 21) par rapport à la direction longitudinale de la courroie centrale (3a, 3b).

3. Courroie de transmission de puissance (1) pour transmettre des charges élevées selon la revendication 1 ou 2,
dans laquelle la partie concavo-convexe comprend des évidements en zigzag (24) et des saillies (23) prévus sur la partie supérieure d'au moins l'une des parties linéaires convexes (20, 21).

4. Courroie de transmission de puissance (1) pour transmettre des charges élevées selon l'une quelconque des revendications 1 à 3,
dans laquelle la partie concavo-convexe (22) comprend une saillie (23) prévue sur au moins une partie des parties linéaires convexes (20, 21).

5. Courroie de transmission de puissance (1) pour transmettre des charges élevées selon l'une quelconque des revendications précédentes,
dans laquelle la partie concavo-convexe (22) comprend une saillie (23) s'étendant de manière continue dans la direction longitudinale de la courroie centrale (3a, 3b).

6. Courroie de transmission de puissance (1) pour transmettre des charges élevées selon l'une quelconque des revendications précédentes,
dans laquelle la partie concavo-convexe (22) a une hauteur de l'ordre de 0,05 à 0,3 mm.

7. Courroie de transmission de puissance (1) pour transmettre des charges élevées selon l'une quelconque des revendications précédentes,
dans laquelle l'élément fibreux est une toile de recouvrement (10) recouvrant une surface de la courroie centrale (3a, 3b), et
dans laquelle les toiles de recouvrement (10) sont prévues sur les surfaces supérieure (6) et inférieure (7) de la courroie centrale (3a, 3b), et
au moins une trame dans la direction longitudinale de la courroie centrale (3a, 3b) est une fibre d'aramide.

8. Courroie de transmission de puissance (1) pour transmettre des charges élevées selon la revendication 7,
dans laquelle un traitement de liaison est réalisé sur la toile de recouvrement (10) et un agent de traitement de liaison contient un matériau de réduction de coefficient de friction.

9. Courroie de transmission de puissance (1) pour transmettre des charges élevées selon la revendication 8,
dans laquelle la toile de recouvrement (10) a un rapport de largeur avant le traitement de liaison sur une largeur après le traitement de liaison de 55 à 70%.
